# EUROPEAN PATENT SPECIFICATION

(11) **EP 0 841 502 B1**
(45) Date of publication and mention of the grant of the patent: **30.01.2002**
(21) Application number: 97203367.4
(22) Date of filing: 30.10.1997
(51) Int. Cl.: F16H 35/00, B63H 1/08, B63H 5/02, F03B 17/06, F03D 3/06

(54) **Whale-tail-type propulsion system for a vessel**
Hai-Flossenpropeller für Schiffe
Système de propulsion à aubes pour navires

(30) Priority: 01.11.1996 NL 1004409
(43) Date of publication of application: 13.05.1998
(73) Proprietor: SCHELDE MARITIEM B.V., 4380 AN Vlissingen (NL)
(72) Inventor: Ludolphij, Johannes Wilhelmus Lubbertus, 4380 EW Vlissingen (NL)
(74) Representative: de Bruijn, Leendert C.

(56) References cited:
- DE-A- 3 329 807
- FR-A- 2 396 688
- GB-A- 148 596
- GB-A- 297 803
- US-A- 1 416 052
- US-A- 5 082 423
- AKADEMISCHER VEREIN HÜTTE, E.V. (ED.): "HÜTTE, Des Ingenieurs Taschenbuch, Vol. II A, Maschinenbau Teil A " 1954 , VERLAG VON WILHELM ERNST & SOHN , BERLIN, DE XP002054902 Chapter 2: Getriebe, Paragraph VI.h: Räumliche Kurvengetriebe * page 311 - page 312 *

## Description

The invention relates to a whale-tail-type propulsion system for a vessel, comprising a number of blades fitted on at least one annular casing.

In order to obtain sufficient propulsion, the blades must always have such an annular position that the perpendicular lines on the blades at the centre of the blades intersect each other in a common point. This principle is also called by the name of its inventor: Voith-Schneider. In the case of ships with conventional Voith-Schneider mechanisms the rotary shaft of the blade wheel is placed vertically in the water and the mechanism is so complex that the above mentioned intersection point of the perpendicular lines on the blades at the centre thereof, has to be situated within the boundary of the blade wheel. A similar propulsion system is described in US-A-5082423, disclosing all features of the preamble of claim 1.

The object of the invention is to provide a propulsion system of the type mentioned in the preamble, which has a relatively simple and reliable operating design.

To this end, according to the invention, said casing is rotatable around a fixed pin and is connected by way of a transmission to the or a propulsion shaft of the vessel, a number of shaft ends with denticulations are rotatably mounted at mutual angular distances in the casing, a worm disc is fitted on said fixed pin and has grooves, a number of gear wheels, corresponding to the number of shaft ends, are in mesh with the shafts end denticulations, said worm disc is in mesh either with said gear wheels or with gear wheels fitted on shafts on which also said gear wheels are fixed, and when the casing is rotating, the shaft ends undergo an oscillation movement determined by the shape of the track of the grooves on the peripheral edge of the worm disc.

US-A-1.416.052 discloses a wind mill having a mechanism to control the windpropelled blades. This mechanism is provided with a blade spider rotatable about a pin, a number of shaft ends with denticulation rotatably mounted at mutual angular distance in the casing, a worm disc fitted on the fixed pin and having grooves, a number of gear wheels corresponding to the number of shaft ends, which gear wheels are in mesh with the shaft end denticulation, said worm disc being in mesh either with said gear wheels or with gear wheels fitted on shafts on to which also said gear wheels are fixed. When the casing is rotating the blades undergo an oscillating movement. The degree of deflection of the blades is determined by the reciprocation of a master gear controlled by a centrifugal governor which can be controlled by a weather vane.

Finally, the invention relates to a vessel provided with an abovementioned whale-tail-type propulsion system, in which the blades are horizontal in the lengthwise direction and at both their ends are connected to shaft ends forming part of two casings placed opposite each other.

The invention will now be explained in greater detail with reference to the figures, in which an exemplary embodiment is shown.

Figure 1 shows a side view of the rear side of a ship with a whale-tail-type propulsion system.

Figure 2 shows a perspective view of a whale-tail-type propulsion system.

Figure 3 shows a longitudinal section through the movement mechanism of the whale-tail-type propulsion system along the line III-III in Figure 4.

Figure 4 shows a cross-section through the movement mechanism according to the invention on a smaller scale.

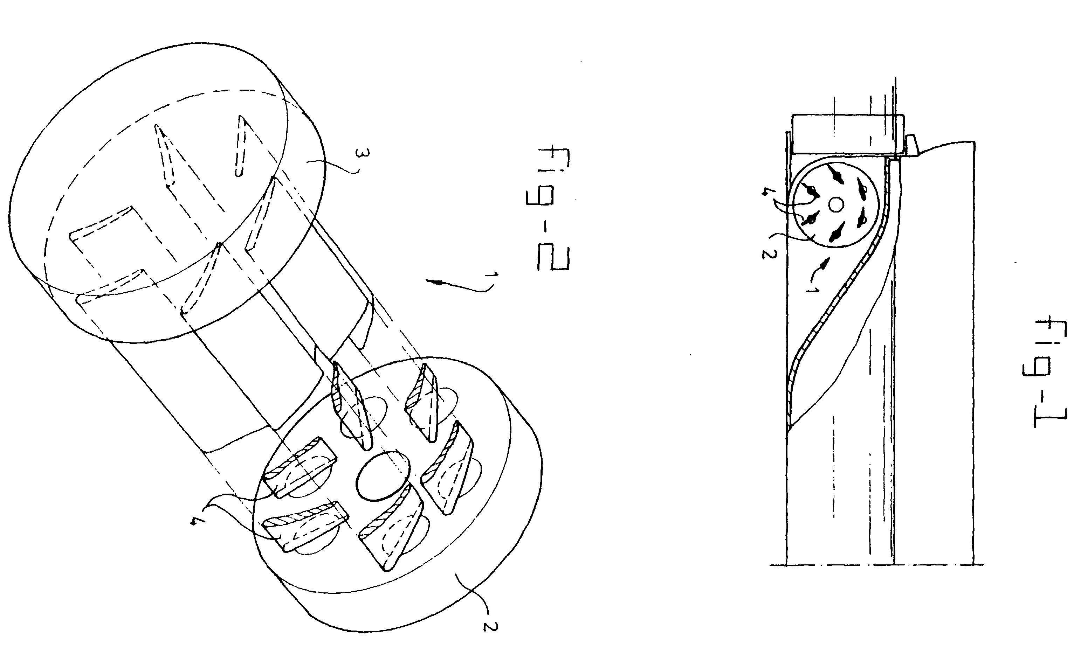

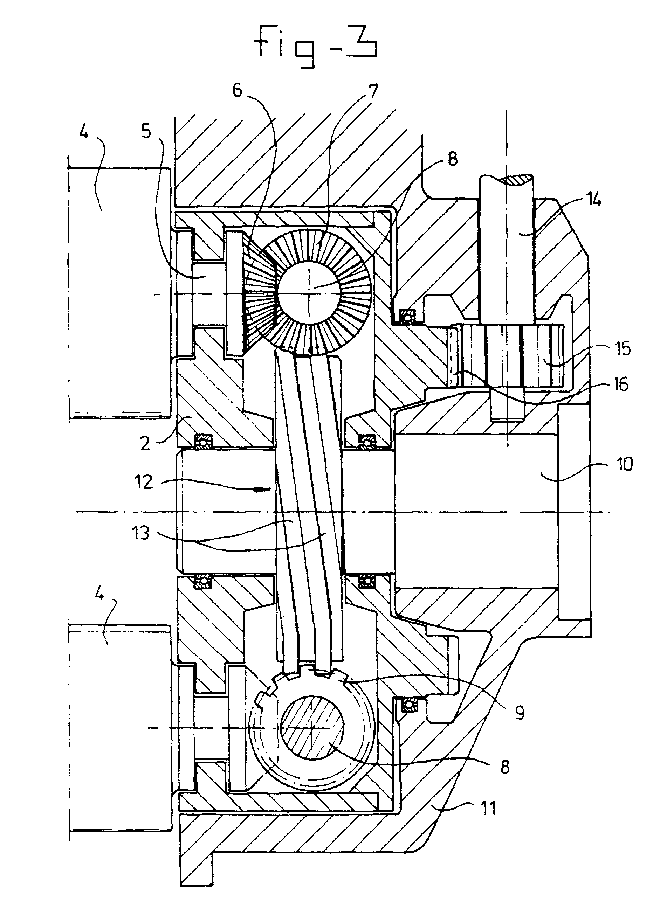

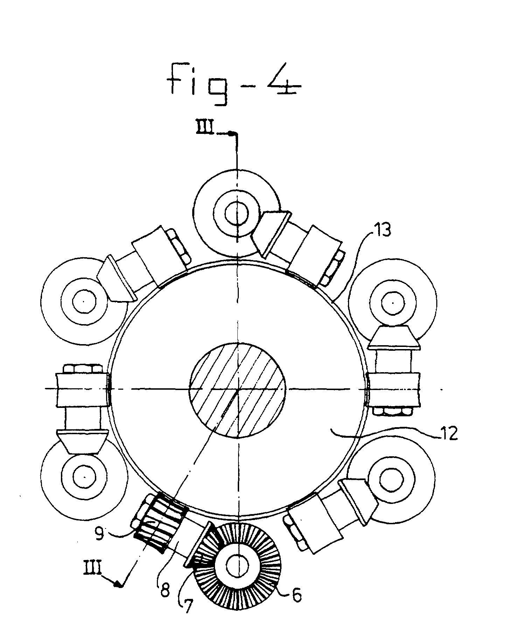

The ship's propulsion system shown in Figures 1 and 2 consists of a blade wheel 1 with horizontal axis of rotation. The blade wheel comprises two cylindrical rotary casings 2 and 3, in which the blades 4 are swivellably mounted. At least one of the casings 2 and 3 forms part of a movement mechanism which is shown in Figures 3 and 4.

Each blade 4 is fixed to a shaft end 5 which is fixed rotatably in the casing 2 and is provided with a conical denticulation 6 at its rear side. Each conical denticulation 6 is in mesh with a conical denticulation 7 on one end of a shaft 8, which is provided with a denticulation 9 on its other end.

A pin 10 is fixed in the fixed housing 11 of the movement mechanism, and a round worm disc 12 is fixed on said pin 10. Said worm disc 12 has grooves 13 with a carefully chosen course. The denticulation 9 meshes with said grooves.

A propulsion shaft 14 (for example, the main propulsion shaft of a ship) is mounted in the housing 11. A gear wheel 15 fixed on said shaft 14 meshes with a cylindrically designed denticulation 16 of the casing 2.

It will be clear that by rotation of the shaft 14 the casing 2 with shaft ends 5, denticulations 6, shafts 8 and denticulations 7 and 9 rotate about the pin 10. Since the denticulations 9 mesh with the grooves 13 of the worm disc 12 and the shape of said grooves 13 in the peripheral direction thereof according to an accurately established course deviates from a circle, during the rotation of the casing 2 on the shafts 8 an oscillating movement will be imposed by way of the denticulations 7 and 6 on the shaft ends 5, which leads to a wagging whale-tail-type movement of the blades 4.

Modifications of the construction shown and described are possible within the scope of the main claim. For example, the denticulations 7 and 9 could be combined, in which case the shafts 8 are omitted. In that case the combined denticulations would mesh both with the denticulation 6 and with the grooves of the worm disc 12. The propulsion mechanism can be placed horizontally, as shown, but can also be placed vertically. In the latter case a single movement mechanism at the top side of the blades 4 will suffice.

The worm disc 12 could also be made slidable and/or rotatable, with the result that the position, in particular the angular position, of the blades 4 changes and the whale-tail-type propulsion movement of the blades is changed.

The movement mechanism described can also be used in the case of a conventional Voith-Schneider propulsion system, and also in blade wheels which are described by Prof. J.D. van Maanen in the report of his presentation: Non-conventional propulsion devices, presentation at the second symposium on marine propellors, the society of naval architects of Japan, Tokyo, 24-25 November 1971".

## Claims

1. Whale-tail-type propulsion system for a vessel, comprising a number of blades (4) fitted on at least one annular casing (2; 3),
- said casing being rotatable around a fixed pin (10) and connected by way of a transmission (15, 16) to the or a propulsion shaft (14) of the vessel,
- a number of shaft ends (5) with denticulations (6) rotatably mounted at mutual angular distances in the casing (2; 3),
- a number of gear wheels (7), corresponding to the number of shaft ends (5), being in mesh with the shafts end denticulations (6),
**characterized in**
- that a worm disc (12) is fitted on said fixed pin (10) and has grooves (13),
- that said worm disc (12) is in mesh either with said gear wheels (7) or with gear wheels (9) fitted on shafts (8) on which also said gear wheels (7) are fixed,
- and that when the casing (2; 3) is rotating the shaft ends (5) undergo an oscillating movement determined by the shape of the grooves (13) on the peripheral edge of the worm disc (12).

2. Vessel provided with a whale-tail-type propulsion system according to claim 1 **characterized in that** the blades (4) run horizontally in the lengthwise direction and at both their ends are connected to shaft ends (5) forming part of two casings (2; 3) placed opposite each other.

## Patentansprüche

1. Haiflossenantriebssystem für Schiffe, enthaltend eine Vielzahl von Schaufeln (4), die an wenigstens einem ringförmigen Gehäuse (2; 3) montiert sind, wobei
- das Gehäuse um einen festen Zapfen (10) drehbar ist und mittels eines Getriebes (15, 16) mit der oder einer Antriebswelle (14) des Schiffes verbunden ist,
- eine Anzahl von Wellenenden (5) mit Zacken (6) drehbar unter gegenseitigem Winkelabstand im Gehäuse (2; 3) angebracht sind,
- eine Anzahl von Zahnrädern (7) entsprechend der Anzahl der Wellenenden (5) mit den Wellenendzacken (6) kämmen
**dadurch gekennzeichnet**
- **dass** eine Schneckenscheibe (12) auf dem feststehenden Zapfen (10) angebracht ist und Rillen (13) hat,
- **dass** die Schneckenscheibe (12) entweder mit den genannten Zahnrädern (7) kämmt oder mit Zahnrädern (9), die auf Wellen (8) angebracht sind auf denen auch die genannten Zahnräder (7) angebracht sind,
- und **dass** bei Rotieren des Gehäuses (2, 3), die Wellenenden (5) eine oszillierende Bewegung ausführen, die von der Form der Rillen (13) auf der Umfangskante der Schneckenscheibe (12) bestimmt wird.

2. Schiff, das mit einem Haiflossenantriebssystem nach Anspruch 1 ausgestattet ist, **dadurch gekennzeichnet, dass** die Schaufeln (7) sich waagrecht in Längsrichtung erstrecken und an ihren beiden Enden mit Wellenenden (5) verbunden sind, die Teil von zwei Gehäusen (2, 3) sind, die einander gegenüberstehen.

## Revendications

1. Système de propulsion à aubes pour navire, comprenant :
. une pluralité de pales (4) montées ajustées sur au moins un carter annulaire (2, 3), ce carter étant mobile en rotation autour d'un pivot fixe (10) et relié à un ou à l'arbre de propulsion (14) du navire au moyen d'une transmission (15, 16),
. une pluralité d'extrémités d'arbre (5) à dentures (6) montées à rotation dans le carter (2, 3) à distance angulaire commune,
. une pluralité de roues dentées (7), correspondant au nombre d'extrémités d'arbre (5), en prise avec les dentures (6) des extrémités d'arbre,
**caractérisé en ce qu'**un disque à vis sans fin (12) est fixé sur le pivot fixe (10) et présente des rainures (13), **en ce que** ledit disque à vis sans fin (12) est en prise, soit avec les roues dentées (7), soit avec des roues dentées (9) ajustées sur des arbres (8) sur lesquels les roues dentées (7) sont également fixées, et **en ce que**, lorsque le carter (2, 3) tourne, les extrémités d'arbre (5) subissent un mouvement oscillatoire déterminé par la forme des rainures (13) périphériques du disque à vis sans fin (12).

2. Navire équipé d'un système de propulsion à aubes selon la revendication 1, **caractérisé en ce que** les pales (4) s'étendent horizontalement dans le sens de la longueur et **en ce que** leurs deux extrémités sont reliées aux extrémités d'arbre (5) faisant partie de deux carters (2, 3) disposés l'un en face de l'autre.
